Europäisches Patentamt

European Patent Office

Office européen des brevets

(11) Veröffentlichungsnummer : **0 203 082**
**B1**

(12) EUROPÄISCHE PATENTSCHRIFT

(45) Veröffentlichungstag der Patentschrift :
05.04.89

(21) Anmeldenummer : 85904594.0

(22) Anmeldetag : 01.10.85

(86) Internationale Anmeldenummer :
PCT/CH 85/00141

(87) Internationale Veröffentlichungsnummer :
WO/8602532 (09.05.86 Gazette 86/10)

(51) Int. Cl.⁴ : **A 46 B 7/04**, A 46 B 9/04//
A61C15/00

(54) VORRICHTUNG ZUM REINIGEN DER ZAHNZWISCHENRÄUME.

(30) Priorität : 25.10.84 CH 5108/84

(43) Veröffentlichungstag der Anmeldung :
03.12.86 Patentblatt 86/49

(45) Bekanntmachung des Hinweises auf die Patenter-
teilung : 05.04.89 Patentblatt 89/14

(84) Benannte Vertragsstaaten :
CH DE FR GB IT LI NL SE

(56) Entgegenhaltungen :
EP--A-- 0 001 044
DE--C-- 560 459
FR--A-- 384 303
FR--A-- 980 840
FR--A-- 1 025 878
FR--E-- 58 747
GB--A-- 1 932
US--A-- 1 847 495
US--A-- 1 897 365
US--A-- 2 251 853
US--A-- 3 559 226
US--A-- 4 222 143
US--A-- 4 319 377

(73) Patentinhaber : CURADEN AG
Amlehnstrasse 22
CH-6010 Kriens (CH)

(72) Erfinder : BREITSCHMID, Ulrich
Hochrütirain 5
CH-6045 Meggen (CH)

(74) Vertreter : Keller, René, Dr. et al
Patentanwälte Hartmut Keller, Dr. René Keller Post-
fach 12
CH-3000 Bern 7 (CH)

**Beschreibung**

Die Erfindung betrifft eine Vorrichtung zum Reinigen der Zahnzwischenräume gemäss dem Oberbegriff des Patentanspruchs 1.

Bei der bekannten Vorrichtung dieser Art (EP-A 1 044) hat der Formteil einen zylindrischen Klemmstopfen, der mit Klemmsitz in ein Sackloch des Griffs einsetzbar ist. Beim Reinigen eines engen Zahnzwischenraums kann sich der Borstenträger in diesem verklemmen. Er kann dann nur durch starken Zug wieder herausgezogen werden, wobei sich der Klemmstopfen infolge der hohen Zugkräfte aus dem Sackloch lösen kann. Man muss folglich mit der Hand in den Mund hineingreifen und den Formteil fassen, was wegen dessen Kleinheit mühsam ist und wobei vor allem im Bereich der schwer zugänglichen Backenzähne die Gefahr einer Verletzung des Zahnfleischs oder der Lippen besteht.

Es sind ferner Vorrichtungen anderer Art (US-A-4 319 377, US-A-3 559 226, US-A-4 222 143, US-A-4 387 479) bekannt, bei denen der borstenlose Endteil des Borstenträgers nicht in einen Formteil eingebettet ist, sondern unmittelbar am Griff befestigt wird. Der borstenlose Endteil wird dabei durch ein Durchgangsloch des Griffs hindurchgeführt und zum Griff hin umgebogen, woraufhin eine auf dem Griff gelagerte Hülse über das umgebogene Drahtende geschoben wird. Das Umbiegen des Drahtendes und das beim Aufschieben der Hülse wegen des Zurückfederns des Drahts unumgängliche Niederhalten des umgebogenen Drahtendes ist mühsam, und man kann sich dabei am Drahtende verletzen. Wenn sich die Bürste beim Reinigen der Zahnzwischenräume zwischen den Zähnen verklemmt und man zum Lösen kräftig am Griff zieht, besteht die Gefahr, dass der Draht an seiner am Rand des Durchgangslochs liegenden Biegestelle abbricht, wobei das Entfernen der abgebrochenen, zwischen den Zähnen steckenden Bürste schwierig und mit der Gefahr verbunden ist, dass die Mundhöhle durch das scharfe, abgebrochene Drahtende verletzt wird. Die Bruchgefahr besteht im übrigen auch bei längerem Gebrauch der Bürste, weil der Draht am Lochrand hin- und hergeknickt wird und sich abnutzt.

Der Erfindung liegt die Aufgabe zugrunde, die Bürste in einfacher Weise zuverlässig und bruchsicher am Griff zu halten und die Gefahr von Verletzungen zu vermeiden.

Die erfindungsgemässe Lösung dieser Aufgabe ist Gegenstand des Patentanspruchs 1.

Der Vorteil der Erfindung ist darin zu sehen, dass die Bürste mit dem den Benutzer vor Verletzungen am borstenlosen Drahtende schützenden Formteil in einfacher Weise und rasch gegen Zug und Druck gesichert am Griff verriegelbar ist. Wegen der Verriegelung kann die Bürste, wenn sie in einem Zahnzwischenraum festgeklemmt ist, mit dem Griff herausgezogen werden, ohne dass sie sich von diesem lösen kann und dann mit der Hand aus der Mundhöhle herausgezogen werden müsste.

Der Anspruch 2 löst die Aufgabe, ein Abknicken bzw. Brechen des Borstenträgers am Austritt aus dem Formteil zu verhindern. Diese Aufgabe löst auch der Anspruch 8. Die Lösung nach Anspruch 2 hat aber gegenüber derjenigen nach Anspruch 8 den Vorteil, dass der Formteil aus verhältnismässig hartem Kunststoff gefertigt werden kann, in dem der Borstenträger zuverlässiger gehalten ist als in einem weichelastischen Kunststoff. Beim letzteren besteht die Gefahr, dass sich der Borstenträger im Gebrauch allmählich aus dem Kunststoff herausarbeitet bzw. -löst.

Im folgenden werden anhand der Zeichnung Ausführungsbeispiele der Erfindung näher erläutert. Es zeigen :

Fig. 1 einen Längsschnitt durch eine Vorrichtung zum Reinigen der Zahnzwischenräume,

Fig. 2 eine Draufsicht auf die Vorrichtung in Blickrichtung des Pfeils II in Fig. 1,

Fig. 3 eine Seitenansicht einer Variante der Bürste der Vorrichtung von Fig. 1,

Fig. 4 eine Draufsicht auf die Bürste von Fig. 3,

Fig. 5 eine teilweise geschnittene Seitenansicht einer bevorzugten Variante der Bürste der Vorrichtung von Fig. 1,

Fig. 6 einen Längsschnitt durch eine Variante der Vorrichtung von Fig. 1.

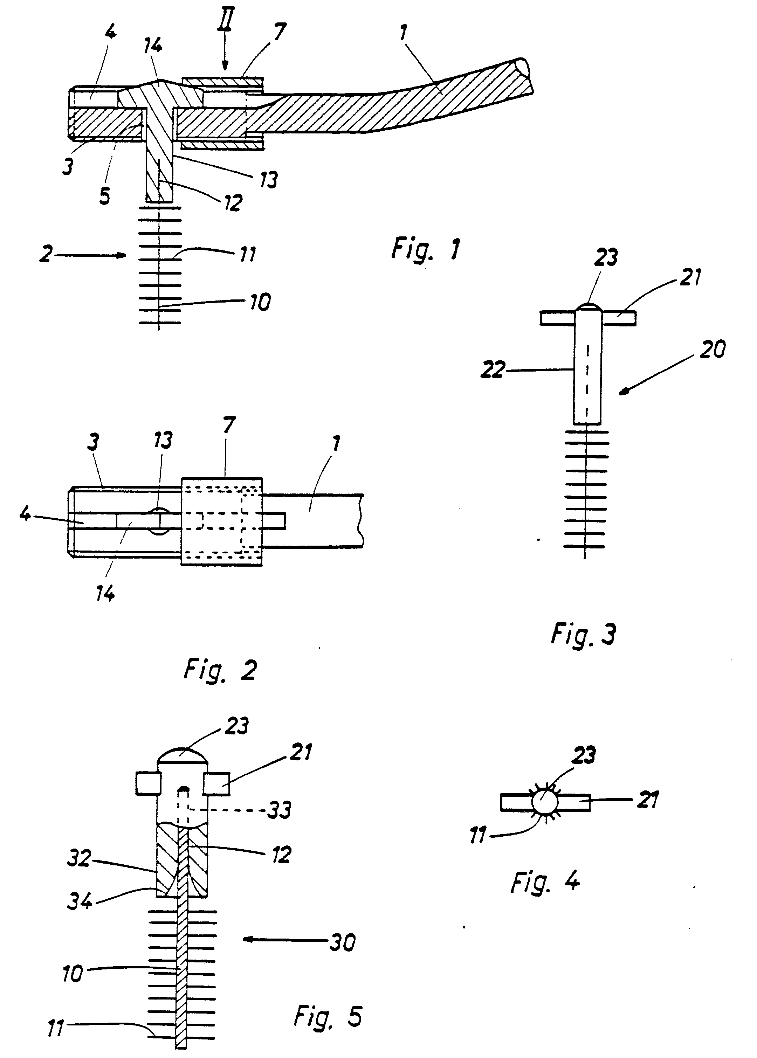

Die in Fig. 1 dargestellte Vorrichtung hat einen stabförmigen Griff 1, von dem lediglich der eine Endteil dargestellt ist, der als Halter für eine Interdentalbürste (interproximale Bürste) 2 ausgebildet ist. Das dargestellte Griffende hat ein Bolzengewinde 3, durch das in Achsenlängsrichtung eine Nut 4 und senkrecht dazu eine Durchgangsbohrung 5 verläuft, deren Durchmesser grösser als die Breite der Nut 4 ist. Auf das Bolzengewinde 3 ist eine Gewindehülse 7 geschraubt.

Die Bürste 2 hat einen in der üblichen Weise aus einer verdrillten Drahtschleife gebildeten Borstenträger 10 mit Borsten 11 und einem borstenlosen Endteil 12. Dieser Endteil 12 ist in einen zylindrischen Formteil 13 aus weichelastischem Kunststoff eingegossen. Am freien Ende des Formteils 13 ist eine einen Anschlag bildende Traverse 14 gebildet, deren beide Arme keilförmig nach aussen verjüngt sind.

Der Durchmesser der Durchgangsbohrung 5 ist ausreichend gross bemessen, damit Bürsten 2 mit den längsten für die Reinigung von Zahnzwischenräumen in Betracht kommenden Borsten 11 hindurchgeführt werden können. Der Durchmesser des zylindrischen Formteils 13 ist demjenigen der Durchgangsbohrung 5 und die Breite der Traverse 14 derjenigen der Nut 4 mit Spiel angepasst. Die Dicke und der Keilwinkel der Traversenarme sind so bemessen, dass die verjüngten Enden der Traversenarme noch innerhalb der Nut liegen und sich die oberen Keilflächen zur Firstlinie hin allmählich aus der Nut heraus erheben und Auflaufflächen für die Hülse 7 bilden.

Die Bürste 2 wird wie folgt am Griff 1 gehaltert :

Man ergreift den Formteil 13 und führt die Bürste mit den Borsten 11 voran — in Fig. 1 von oben — durch die Bohrung 5, wobei die Traverse 14 in die Nut 4 hineingleitet und an deren Boden anschlägt. Daraufhin schraubt man die Gewindehülse 7 auf dem Bolzengewinde 3 in Fig. 1 nach links, wobei das Hülsengewinde auf die obere Keilfläche bzw. Auflauffläche des rechten Traversenarms aufläuft und dieser zwischen der Hülse 7 und dem Boden 4 der Nut festgeklemmt wird.

Die in Fig. 3 und 4 dargestellte Bürste 20 ist ebenfalls für die Halterung am in Fig. 1 dargestellten Griffende bestimmt. Sie unterscheidet sich von der Bürste 2 durch eine anders ausgebildete Traverse 21 ihres Formteils 22. Die beiden Arme der Traverse 21 haben eine konstante, der Tiefe der Nut 4 angepasste Dicke und sind am Mantel des zylindrischen Formteils 22 angeformt, wobei der Formteil einen über die Traverse hinausragenden, gewölbten Kopfteil 23 hat. Wenn der Formteil 22 in die Bohrung 5 eingesetzt ist und die Traverse 21 am Boden der Nut 4 anliegt, ragt die gewölbte Kopffläche 23 aus der Nut heraus. Beim Aufschrauben läuft die Gewindehülse 7 über den ihr zugewandten Arm der Traverse 21 und schlägt dann am unten aus der Bohrung 5 herausragenden Teil der Fassung 22 an. Beim Weiterschrauben der Hülse 7 wird der untere Teil des Formteils etwas zusammengedrückt sowie abgebogen und die Hülse läuft auf die gewölbte Kopffläche auf, wobei der Kopf 23 und die Traverse 21 zwischen der Hülse und dem Boden der Nut 4 festgeklemmt werden.

Wie erwähnt besteht der Formteil 13, 22 bei den oben beschriebenen Ausführungsbeispielen aus weichelastischem (gummielastischem) Kunststoff, so dass er leicht elastisch biegsam ist. Er wirkt dadurch als Knickschutz für den aus verdrilltem Draht bestehenden Borstenträger. Der in Formteil sitzende Endteil 12 des Borstenträgers bzw. Drahts 10 kann, wie in Fig. 3 angedeutet, so lang bemessen sein, dass er sich in den in der Durchgangsbohrung 5 sitzenden Teil des Formteils 22 hinein erstreckt. Zweckmässig ist er jedoch, wie in Fig. 1 dargestellt, kürzer bemessen und zwar so, dass sein Ende einen Abstand von der Bohrung 5 hat, der Formteil 13 also einen unten aus der Bohrung 5 herausragenden, drahtfreien Teil hat. Dieser Teil ist entsprechend der Elastizität des Kunststoffs biegsam und nimmt die beim Reinigen der Zahnzwischenräume auf den Borstenträger wirkenden Biegekräfte auf. Damit wird die Gefahr eines Abknickens des Borstenträgers vermieden. Allerdings besteht bei dem weichelastischen Kunststoff die Gefahr, dass sich der Borstenträger im Gebrauch aus ihm herausarbeitet.

Diese Gefahr vermeidet die in Fig. 5 dargestellte Bürste 30, bei welcher der Formteil 32 aus verhältnismässig hartem Kunststoff besteht, und trotzdem ein Abknicken bzw. Brechen des Borstenträgers 10 zuverlässig vermieden wird. Der Formteil 32 unterscheidet sich von den oben beschriebenen Formteilen 13, 22 dadurch, dass sein den borstenlosen Endteil 12 des Borstenträgers 10 aufnehmender Raum einen hinteren, zylindrischen Abschnitt 33 und einen vorderen, konisch oder hyperbolisch zum Ausgang hin erweiterten Abschnitt 34 hat. Der hintere Abschnitt des Endteils 12 ist fest im hinteren, zylindrischen Abschnitt 33 der Bohrung eingebettet ; der vordere Abschnitt des Endteils 12 ist mit in Richtung auf die Borsten 11 zunehmendem Spiel biegbar im sich allmählich erweiternden Abschnitt 34 der Bohrung gelagert. Somit kann sich der vordere Abschnitt des Endteils 12 elastisch im Bohrungsabschnitt 34 verbiegen, wobei dessen Wandung eine Verbiegung über die Elastizitätsgrenze hinaus verhindert. Durch die zum Ausgang hin stetige Vergrösserung der Weite des Bohrungsabschnitts 34 wird eine gleichmässige Biegebeanspruchung des Borstenträgers 10 erreicht und die sonst bestehende Abknick- und Bruchgefahr des Borstenträgers 10 am Austritt aus dem relativ harten Formteil 32 vermieden.

Für die Vermeidung von Verletzungen in der Mundhöhle ist es noch wesentlich, dass die Fassung bzw. die Traverse nur wenig aus der Nut herausragt und der herausragende Teil jedenfalls keine schrafen Kanten oder Vorsprünge aufweist.

Vorteilhaft ist bei der beschriebenen Vorrichtung ferner, dass die Bürste mühelos und rasch ausgewechselt werden kann. Dabei können wahlweise Bürsten mit unterschiedlicher Borstenlänge verwendet werden. Um das Unterscheiden der Bürsten verschiedener Borstenlänge zu erleichtern, können die Formteile der Bürsten aus unterschiedlich gefärbtem Kunststoff bestehen, d. h. jeder Borstenlange eine bestimmte Farbe zugeordnet sein.

Die Hülse könne statt schraubbar auch lediglich verschiebbar auf einem zylindrischen Griffende gelagert sein. Der Schraubtrieb ermöglicht aber natürlich eine wesentlich bessere Klemmwirkung der Hülse und vermeidet die Gefahr, dass die Hülse wegrutscht.

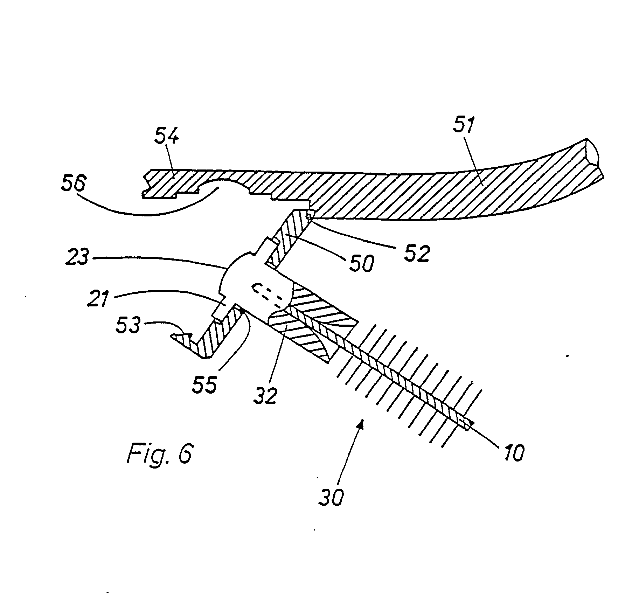

Bei der in Fig. 6 dargestellten Variante der Vorrichtung ist ein unterer Endabschnitt 50 des Griffs 51 um eine Gelenkachse 52 schwenkbar am Griff gelagert. Der untere Endabschnitt 50 ist an der der Achse 52 gegenüberliegenden Stirnseite mittels eines Schnappverschlusses 53 am oberen, einstückig mit dem Griff gebildeten Endabschnitt 54 sicherbar. Die Bürste dieser Vorrichtung entspricht der in Fig. 5 dargestellten Bürste 30. Sie wird bei gelöstem Schnappverschluss 53 und herabgeklapptem, unteren Endabschnitt 50 durch ein in diesem vorgesehenes Durchgangsloch 55 gesteckt, wobei der untere Teil der Traverse 21 in eine für ihn vorgesehene Nut im unteren Endabschnitt 50 eingesetzt wird. Der obere Endabschnitt 54 hat eine dem Kopf 23 und dem oberen Teil der Traverse 21 des Formteils 32 angepasste Aussparung 56, in welche diese beim Heraufklappen des unteren Endabschnitts 50 hineingreifen. Die Traverse 21 ist dann bei eingeschnapptem Schnappverschluss 53 zwischen dem oberen und unteren Endabschnitt 54, 50 formschlüssig gehalten und so gegen Druck und Zug des Borstenträgers 10 gesichert.

Um die Gefahr zu vermeiden, dass der Schnappverschluss 53 bei starkem Zug auf den Borstenträger 10 ausrastet, können die beiden Endabschnitte 50, 54 auch so ausgestaltete Aussparungen aufweisen, dass der Formteil 32 bzw. sein Traverse 21 mit parallel zur Achse 52 (also senkrecht zur Zeichnungsebene in Fig. 7) verlaufendem Borstenträger 10 formschlüssig zwischen den beiden Endabschnitten 50, 54 gehalten ist. In diesem Fall entfällt das Durchgangsloch 55 und die Traverse 21 wird ausreichend breit bemessen, damit sie genügend weit in die je ihrer halben Breite angepassten Aussparungen beider Endabschnitte 50, 54 hineinragt und so in beiden Endabschnitten 50, 54 gegen auf den Borstenträger 10 wirkenden Zug und Druck abgestützt ist.

Der Formteil der Bürste könnte mit dem Griffende auch nach Art eines Bajonettverschlusses verbunden sein, dessen Handhabung wegen der Kleinheit der Teile aber auch einige Geschicklichkeit erfordert.

Bei allen oben beschriebenen Ausführungsformen der Vorrichtung ist der Formteil 13, 22, 32, 43 der Bürste 2, 20, 30, 41 formschlüssig am Griffende gehalten, wobei der Formschluss eine Verschiebung des Formteils in Längsrichtung des Borstenträgers 10 infolge von auf den letzteren wirkenden Zug- oder Druckkräften verhindert.

**Patentansprüche**

1. Vorrichtung zum Reinigen der Zahnzwischenräume, mit einer Interdentalbürste (2 ; 20 ; 30 ; 41) und einem zur auswechselbaren Halterung der Bürste ausgebildeten Griff (1 ; 40 ; 51), wobei die Bürste (2 ; 20 ; 30 ; 41) einen Formteil (13 ; 22 ; 32 ; 43) hat, in den ein borstenloser Endteil (12) des Borstenträgers (10) der Bürste eingebettet ist, und der Griff (1 ; 40 ; 51) eine ein Loch (5 ; 55) aufweisende Fassung (4, 7 ; 50, 54) hat, die den Formteil (13 ; 22 ; 32 ; 43) unverschiebbar aufnimmt, dadurch gekennzeichnet, dass am dem Borstenträger (10) abgewandten Ende des Formteils (13 ; 22 ; 32) ein quer zur Borstenträgerlängsrichtung vorstehendes Formschlussglied (14 ; 21) gebildet ist, und die Fassung (4, 7 ; 50, 54) ein zum losen Durchführen des Formteils (13 ; 22 ; 32) bemessenes Durchgangsloch (5 ; 55) hat und so ausgebildet ist, dass der Formteil (13 ; 22 ; 32) mit Hilfe des Formschlussglieds (14 ; 21) an der Fassung (4, 7 ; 50, 54) formschlüssig gegen Zug und Druck des Borstenträgers (10) gesichert verriegelbar und zum Auswechseln der Bürste (2 ; 30) aus seiner Formschlusslage lösbar ist.

2. Vorrichtung nach Anspruch 1, dadurch gekennzeichnet, dass der den borstenlosen Endteil (12) des Borstenträgers (10) aufnehmende Raum (33, 34) des Formteils (32 ; 43) in Richtung auf den die Borsten (11) aufweisenden Teil des Borstenträgers (10) erweitert (34) ist, so dass der den Borsten (11) abgewandte, hintere Abschnitt des Endteils (12) fest im Formteil (32 ; 43) sitzt und der den Borsten (11) zugewandte, vordere Abschnitt des Endteils (12) mit in Richtung auf die Borsten (11) zunehmendem Spiel im Formteil (32 ; 43) biegbar ist.

3. Vorrichtung nach Anspruch 1 oder 2, dadurch gekennzeichnet, dass die Fassung (4, 7 ; 50, 54) zwei das Formschlussglied (14 ; 21) gegen Zug und Druck des Borstenträgers (10) sichernde Teile (4, 7 ; 50, 54) aufweist, deren einer (4 ; 54) einstückig am Griff (1 ; 51) gebildet und deren anderer (7 ; 50) so am Griff (1 ; 51) gelagert (3 ; 52) ist, dass er zum Verriegeln und Auswechseln der Bürste (2 ; 30) in eine Formschlusslage und aus dieser wieder heraus bewegbar ist.

4. Vorrichtung nach Anspruch 3, dadurch gekennzeichnet, dass das Durchgangsloch (5) ausreichend gross bemessen ist, um den Borstenträger (10) mit den Borsten (11) hindurchzuführen, der Formteil (13 ; 22 ; 32) dem Durchgangsloch (5) mit Spiel angepasst ist, und der eine Teil der Fassung (4, 7) durch eine an dem einen Griffende ausgebildete, das Formschlussglied (14 ; 21) aufnehmende Nut (4) gebildet ist, durch deren Boden das Durchgangsloch (5) verläuft, und der andere Teile der Fassung durch eine auf dem einen Griffende drehbar und/oder verschiebbar gelagerte Hülse (7) gebildet ist.

5. Vorrichtung nach Anspruch 4, dadurch gekennnzeichnet, dass das Formschlussglied (14) oder ein über das Formschlussglied (21) vorstehender Kopf (23) des Formteils (13 ; 22 ; 32) eine schräge oder gewölbte Auflauffläche für die Hülse (7) hat, so dass das Formschlussglied (14) bzw. der Kopf (23) mit dem Formschlussglied (21) zwischen der Hülse (7) und dem Boden der Nut (4) festklemmbar ist.

6. Vorrichtung nach einem der Ansprüche 3-5, dadurch gekennzeichnet, dass das Formschlussglied durch eine Traverse (14 ; 21) gebildet ist.

7. Vorrichtung nach Anspruch 4, dadurch gekennzeichnet, dass der Formteil (13 ; 22 ; 32) länger als das Durchgangsloch (5) ist und vorzugsweise eine zylindrische Form hat.

8. Vorrichtung nach einem der Ansprüche 1 bis 7, dadurch gekennzeichnet, dass der Formteil (13 ; 22 ; 32) aus weichelastischem Kunststoff besteht.

9. Vorrichtung nach den Ansprüchen 4 und 8, dadurch gekennzeichnet, dass der borstenlose Endteil (12) des Borstenträgers (10) nur in einem Teil des Formteils (13) sitzt und der restliche Teil des Formteils (13) länger als das Durchgangsloch (5) ist.

10. Vorrichtung nach Anspruch 3, dadurch gekennzeichnet, dass der andere Teil (50) der Fassung (50, 54) durch einen schwenkbar (52) am Griff (51) gelagerten und mittels eines Schnappverschlusses (53) am Griff (51) in der Formschlusslage sicherbaren Teil (50) besteht, und das im einen oder im anderen Teil (50) der Fassung (50, 54) vorgesehene, dem Formteil (32) mit Spiel angepasste Durchgangsloch (55) ausreichend gross bemessen ist, um den Borstenträger (10) mit den Borsten (11) hindurchzuführen.

## Claims

1. A device for cleaning the interstices between teeth, having an interdental brush (2, 20, 30, 41) and a handle (1, 40, 51) constructed for interchangeably supporting the brush, the brush (2, 20, 30, 41) having a shaped part (13, 22, 32, 43) in which a bristle-less end part (12) of the bristle carrier (10) of the brush is embedded, the handle (1, 40, 51) comprising a fitting (4, 7, 50, 54) having a hole (5, 55) and non-displaceably accommodating the shaped part (13, 22, 32 43), characterised in that at the end of the shaped part (13 22, 32) which is remote from the bristle carrier (10) there is formed a form-locking member (14, 21) projecting transversely of the longitudinal direction of the bristle carrier, the fitting (4, 7, 50, 54) having a hole (5, 55) dimensioned to allow the loose passage through it of the shaped part (13, 22, 32) and being so constructed that the shaped part (13, 22, 32) can by means of the form-locking member (14, 21) on the fitting (4, 7, 50, 54) be formlockingly secured against the push and pull of the bristle carrier (10) while being adapted to be released from its form-locked position in order that the brush (2, 30) can be exchanged.

2. A device according to Claim 1, characterised in that the space (33, 34) in the shaped part (32, 43) which accommodates the bristle-less end part (12) of the bristle carrier (10) is widened out in the direction of that part of the bristle carrier (10) which comprises the bristles (11), so that the rear portion of the end part (12) which is remote from the bristles (11) is fitted rigidly in the shaped part (32, 43) while the front portion of the end part (12) which is towards the bristles (11) is adapted to be bent in the shaped part (32, 43) with a clearance which increases in the direction of the bristles (11).

3. A device according to Claim 1 or 2, characterised in that the fitting (4, 7 ; 50, 54) comprises two parts (4, 7 ; 50, 54) which secure the form-locking member (14, 21) against traction and compression from the bristle carrier (10), one of the said parts (4, 54) being formed in one piece on the handle (1, 51) while the other part (7, 50) is so mounted on the handle (1, 51), at (3, 52) that it can be moved into and out of a form-locking position for locking and exchanging of the brush (2, 30).

4. A device according to Claim 3, characterised in that the through bore (5) is of a sufficient size that the bristle carrier (10) with the bristles (11) can pass through it while the shaped part (13, 22, 32) is adapted with clearance to fit the through bore (5), one part of the fitting (4, 7) being formed by a slot (4) constructed at one end of the handle and accommodating the form-locking member (14, 21), the through bore (5) extending through the bottom of the said slot (4) the other part of the fitting being formed by a sleeve (7) mounted for displacement and/or rotation on one end of the handle.

5. A device according to Claim 4, characterised in that the form-locking member (14) or a head (23) of the shaped part (13, 22, 32) which protrudes beyond the form-locking member (21) has an oblique or convex ramp to receive the sleeve (7) so that the form-locking member (14) or the head (23), with the form-locking member (21), can be clamped firmly between the sleeve (7) and the bottom of the slot (4).

6. A device according one of Claims 3 to 5, characterised in that the form-locking member is constituted by a cross member (14, 21).

7. A device according to Claim 4, characterised in that the shaped part (13, 22, 32) is longer than the through bore (5) and is preferably of a cylindrical shape.

8. A device according to one of Claims 1 to 7, characterised in that the shaped part (13, 22, 32) consists of softly elastic synthetic plastics material.

9. A device according to Claims 4 and 8, characterised in that the bristle-less end part (12) of the bristle carrier (10) is seated only in one part of the shaped part (13) while the remainder of the shaped part (13) is longer than the through bore (5).

10. A device according to Claim 3, characterised in that the other part (50) of the fitting (50, 54) consists of a part (50) which can be locked in the form-locking position by means of a snap-action locking member (53) on the handle (51) and which is pivotally mounted at (52) on the handle (51) the through bore (55) provided in a or in the other part (50) of the fitting (50, 54) being adapted with clearance to the shaped part (52) and being of sufficiently large size that the bristle carrier (10) with the bristles (11) can be passed through it.

## Revendications

1. Dispositif pour le nettoyage des interstices dentaires, comprenant une brosse interdentaire (2 ; 20 ; 30 ; 41) et une poignée (1 ; 40 ; 51) réalisée pour la retenue interchangeable de la brosse, cette brosse (2 ; 20 ; 30 ; 41) comportant une partie moulée (13 ; 22 ; 32 ; 43) dans laquelle est noyée une partie extrême (12), dépourvue de soies, du porte-soies (10) de la brosse, et la poignée (1 ; 40 ; 51) comportant une monture (4, 7 ; 50, 54) qui est percée d'un trou (5 ; 55) et reçoit la partie moulée (13 ; 22 ; 32 ; 43) sans aucune faculté de coulissement, caractérisé par le fait qu'un organe (14 ; 21) de solidarisation par concordance de formes, saillant transversalement par rapport à la direction longitudinale du porte-soies, est ménagé à l'extrémité de la partie moulée (13 ; 22 ; 32) qui est tournée à l'opposé du porte-soies (10), et la monture (4, 7 ; 50 54) comporte un trou de passage (5 ; 55) dimensionné pour le passage avec jeu de la partie moulée (13 ; 22 ; 32), et est réalisée de telle sorte que, à l'aide de l'organe (14 ; 21) de solidarisation par concordance de formes ménagé sur cette monture (4, 7 ; 50, 54), la partie moulée (13 ; 22 ; 32) soit verrouillable par concordance de formes en s'opposant à une traction et une pression du porte-soies (10), et puisse être libérée de sa position de solidarisation par concordance de formes, en vue du remplacement de la brosse (2 ; 30).

2. Dispositif selon la revendication 1, caractérisé par le fait que la cavité (33, 34) de la partie moulée (32 ; 43), recevant la partie extrême (12) du porte-soies (10) qui est dépourvue de soies, est évasée (34) en direction de la partie du porte-soies (10) qui présente les soies (11), de façon que le tronçon postérieur de la partie extrême (12), tourné à l'opposé des soies (11), repose fermement dans la partie moulée (32 ; 43), et que le tronçon antérieur de la partie extrême (12), tourné vers les soies (11), puisse être ployé dans la partie moulée (32, 43) avec un jeu augmentant en direction des soies (11).

3. Dispositif selon la revendication 1 ou 2, caractérisé par le fait que la monture (4, 7 ; 50, 54) présente deux pièces (4, 7 ; 50, 54) qui retiennent l'organe (14 ; 21) de solidarisation par concordance de formes, en s'opposant à une traction et une pression du porte-soies (10), pièces dont l'une (4 ; 54) est formée d'un seul tenant sur la poignée (1 ; 51), et dont l'autre (7 ; 50) est montée (3 ; 52), sur ladite poignée (1 ; 51), de façon telle qu'elle puisse être amenée à une position de solidarisation par concordance de formes, et en être de nouveau extraite, en vue du verrouillage et du remplacement de la brosse (2 ; 30).

4. Dispositif selon la revendication 3, caractérisé par le fait que le trou de passage (5) est dimensionné suffisamment grand pour assurer le guidage traversant du porte-soies (10) avec les soies (11) ; la partie moulée (13 ; 22 ; 32) est adaptée avec jeu à ce trou de passage (5) ; l'une des pièces de la monture (4, 7) est formée par une rainure (4) qui est façonnée à l'une des extrémités de la poignée, qui reçoit l'organe (14 ; 21) de solidarisation par concordance de formes, et dont le fond est traversé par le trou de passage (5) ; et l'autre pièce de la monture est formée par une douille (7) montée à rotation et/ou à coulissement sur l'une des extrémités de la poignée.

5. Dispositif selon la revendication 4, caractérisé par le fait que l'organe (14) de solidarisation par concordance de formes ou bien une tête (23) de la partie moulée (13 ; 22 ; 32), saillant au-delà de l'organe (21) de solidarisation par concordance de formes, présente une rampe inclinée ou bombée destinée à la douille (7), de telle sorte que l'organe (14) de solidarisation par concordance de formes ou, respectivement, la tête (23) associée à l'organe (21) de solidarisation par concordance de formes, puisse être coincé fermement entre la douille (7) et le fond de la rainure (4).

6. Dispositif selon l'une des revendications 3-5, caractérisé par le fait que l'organe de solidarisation par concordance de formes est constitué par une pièce transversale (14 ; 21).

7. Dispositif selon la revendication 4, caractérisé par le fait que la partie moulée (13 ; 22 ; 32) est plus longue que le trou de passage (5) et présente, de préférence, une forme cylindrique.

8. Dispositif selon l'une des revendications 1 à 7, caractérisé par le fait que la partie moulée (13 ; 22 ; 32) consiste en une matière plastique douée de souplesse élastique.

9. Dispositif selon les revendications 4 et 8, caractérisé par le fait que la partie extrême (12) du porte-soies (10) qui est dépourvue de soies repose seulement dans une région de la partie moulée (13), et la région restante de cette partie moulée (13) est plus longue que le trou de passage (5).

10. Dispositif selon la revendication 3, caractérisé par le fait que l'autre pièce (50) de la monture (50, 54) est formée par une pièce (50) qui est montée pivotante (52) sur la poignée (51) et peut être arrêtée sur cette poignée (51), dans la position de solidarisation par concordance de formes, au moyen d'une obturation à déclic (53) ; et le trou de passage (55), prévu dans l'une ou dans l'autre pièce (50) de la monture (50, 54) et adapté avec jeu à la partie moulée (32), est dimensionné suffisamment grand pour assurer le guidage traversant du porte-soies (10) avec les soies (11).

Fig. 1

Fig. 2

Fig. 3

Fig. 4

Fig. 5

Fig. 6